# EUROPÄISCHE PATENTSCHRIFT

(11) **EP 0 880 462 B1**
(45) Veröffentlichungstag und Bekanntmachung des Hinweises auf die Patenterteilung: **28.07.1999**
(21) Anmeldenummer: 97917995.9
(22) Anmeldetag: 13.02.1997
(51) Int. Cl.: B65G 15/02

(54) **KURVENBANDFÖRDERER**
APRON CONVEYOR
CONVOYEUR A ECAILLES

(30) Priorität: 13.02.1996 US 600593; 29.08.1996 US 704948
(43) Veröffentlichungstag der Anmeldung: 02.12.1998
(73) Patentinhaber: MANNESMANN Aktiengesellschaft, 40213 Düsseldorf (DE)
(72) Erfinder: EWING, Allan, Georgetown, Ontario L7G 5G6 (CA); KRZNARICH, John, Etobecoke, Ontario M9C 3J6 (CA); ZIMNY, Mariusz, Brampton, Ontario L4X 2J3 (CA); GIANVITO, Rodolfo, Oakville, Ontario L6H 4V8 (CA)
(74) Vertreter: Meissner, Peter E., Dipl.-Ing.
(86) Internationale Anmeldenummer: DE9700323
(87) Internationale Veröffentlichungsnummer: WO9729983

(56) Entgegenhaltungen:
- FR-A- 2 365 502
- NL-A- 8 702 617
- US-A- 3 951 256

## Beschreibung

Die Erfindung betrifft einen Kurvenbandförderer gemäß dem Oberbegriff des Anspruches 1 sowie in einer weiteren Ausführungsform gemäß dem Oberbegriff des Anspruches 10.

Derartige Kurvenbandförderer sind geeignet, um im wesentlichen gerade und winklig zueinander ausgerichtete Abschnitte von Förderern zu verbinden. Diese Kurvenbandförderer bestehen im wesentlichen aus einem Paar konisch geformter Umlenkrollen, die am Anfang und Ende des Kurvenbandförderers angeordnet sind, und einem um diese Umlenkrollen geführten endlos umlaufenden Band. Das Band weist quer zur Förderrichtung gesehen an der inneren Seite des Kurvenbandförderers eine geringere Länge als an seiner äußeren Seite auf. Die Umlenkrollen und das Band sind in einem Rahmen gelagert, der quer zur Förderrichtung und in Radialrichtung verlaufende sowie voneinander beabstandete Träger aufweist. Die Träger sind über horizontal sowie in Förderrichtung verlaufende Verbindungsträger untereinander befestigt, wodurch eine ebene Tragfläche für das obere Trum des umlaufendes Bandes gebildet wird. Dieses Band wird im Betrieb, insbesondere wenn das Band von gefördertem Stückgut belastet ist, von einer zum Kurveninneren gerichten Radialkraft beaufschlagt, die das Band nach innen von den Umlenkrollen und somit von dem Rahmen herunterziehen würde. Daher sind Mittel vorgesehen, um das Band auf den Umlenkrollen des Kurvenbandförderers zu halten.

Aus dem US-Patent 4,955,466 ist ein Kurvenbandförderer bekannt, dessen Band an der kurvenäußeren Seite einen wulstartigen Randbreich aufweist, der zwischen oberen und unteren Rollen gehalten wird. Die Rollen sind derartig winklig gelagert, daß diese den Randbereich an seiner nach innen und in Richtung der jeweiligen Oberfläche der Bänder geneigten Seite führen. Dieser Randbereich neigt bei hohen Umlaufgeschwindigkeiten des Bandes dazu, sich zu verwinden und abzuplatten, so daß das Band nicht ausreichend in der Vertikalrichtung geführt ist.

Des weiteren ist aus dem US-Patent 5,332,082 ein Kurvenbandförderer bekannt, der eine Vielzahl an der kurvenäußeren Seite des Bandes befestigte Rollenelemente aufweist. Die Rollenelemente laufen an einer Führungsfläche ab, die einen in Förderrichtung verlaufenden Schlitz aufweist, durch den die kurvenäußere Seite des Bandes hindurchgeführt ist. Eine Vertikalbewegung des oberen Trums des Bandes wird bei diesem Kurvenbandförderer durch die Rollenelemente nicht verhindert. Das Band ist vielmehr frei, um sich von dem horizontalverlaufenden Tragelement (32) abzuheben, bis es an dem freien Ende der geschlitzen Führungsfläche schleift. Diese Art der Führung kann zu einem erhöhten Verschleiß und einer Verringerung der Lebensdauer des Bandes führen.

Um diese vorbeschriebenen Probleme des Sichabhebens des Bandes von seiner Tragfläche zu verhindern, sind Kurvenbandförderer mit zwei Gruppen von Rollelementen bekannt, wovon die eine Gruppe das Herabrutschen des Förderers in Radialrichtung von der Tragfläche und die andere Gruppe das Abheben des Bandes von der Tragfläche verhindert. Derartige Kurvenbandförderer sind beispielsweise in dem deutschen Patent DE-C-41 13 051 beschrieben. Die für die zwei Gruppen von Rollenelementen erforderliche Führung besteht im wesentlichen aus den Führungsschienen für die Rollenlemente und ist konstruktiv aufwendig gestaltet sowie führt zu einer Erhöhung der Bauhöhe des Kurvenbandförderers. Darüber hinaus wird hierdurch der Abstand zwischen dem Kurvenbandförderer und den angrenzenden geraden Förderabschnitten vergrößert, da ausreichend Raum für die Rollelemente und die Führungsschienen vorhanden sein muß. Die Vergrößerung der Abstände zwischen den aneinander angrenzenden Förderern hat jedoch den Nachteil, daß kleineres Stückgut zwischen die Förderer fallen bzw. zwischen diesen eingeklemmt werden kann. Darüber hinaus führt die große Anzahl der erforderlichen Rollelemente zu einem deutlichen Anstieg der Betriebsgeräusche des Kurvenbandförderers.

Außerdem neigen die bekannten Kurvenbandförderer dazu, geringe Zeiten der Verfügbarkeit aufzuweisen, da die Wartung schwierig und zeitraubend ist. Dies ist insbesondere der Fall, wenn der Ersatz des Bandes erforderlich ist, der zumeist den Ausbau des gesamten Kurvenbandförderers erfordert. Nach dem Wiedereinbau dieses Ausbau des gesamten Kurvenbandförderers erfordert. Nach dem Wedereinbau dieses Kurvenbandförderers sind zusätzlich schwierige Ausrichtarbeiten mit den angrenzenden Förderern erforderlich, so daß dieses zu einer Erhöhung der Ausfallzeiten der Förderer führt.

Ferner ist aus der Offenlegungsschrift NL-A-8702617 ein weiterer Kurvenbandförderer bekannt, dessen kurvenäußere Seite über eine Kombination aus einem gleitenden Führungselement und Rollelementen geführt wird. Die Rollenelemente sind an der bandinneren Seite über senkrecht durch das Band gesteckte Bolzen gelagert und laufen zur Vermeidung eines Wandern des Bandes zum Kurveninneren an horizontalen Führungsflächen eines Tragrahmens ab. Die gleitenden Führungselemente sind im Querschnitt u-förmig ausgebildet und seitlich auf den äußeren Rand des Bandes aufgeschoben, sowie über die Bolzen der Rollen gehalten. Die parallel zur Außenseite des Bandes verlaufende Führungsfläche des Führungselementes verläuft angrenzend zu einer horizontalen Führungsfläche des Tragelementes. Ein Abheben des Bandes in Vertikalrichtung kann somit verhindert werden. Nähere Angaben über die Vorteile der Ausgestaltung des Führungselementes in U-Form sowie über etwaig bevorzugte Materialien sind nicht enthalten

Der Erfindung liegt die Aufgabe zugrunde, einen Kurvenbandförderer zu schaffen, der Mittel zum Verhindern des Abhebens des Bandes von der Tragfläche des Förderers aufweist, wobei der Abstand zwischen den aneinander angrenzenden Bandförderern und die Bauhöhe der Kurvenbandförderer minimiert sowie gleichzeitig das Betriebsgeräusch des Förderers reduziert werden soll. Darüber hinaus besteht ein Bedarf für einen Kurvenbandförderer, dessen Band einfach zu montieren und ersetzen ist.

Diese Aufgabe wird erfindungsgemäß durch einen Kurvenbandförderer mit den Merkmalen des Anspruches 1 gelöst. Vorteilhafte Ausgestaltungen des Kurvenbandförderers sind in den Unteransprüchen 2 bis 21 angegeben.

Die vorliegende Erfindung stellt einen Kurvenbandförderer zur Verfügung, der eine äußerst geräuscharme Betriebsweise ermöglicht, wobei gleichzeitig der Abstand zwischen den aneinander angrenzenden Förderern minimiert wird und der Förderer leicht zu warten ist.

Des weiteren ist das endlose Band vom Gewicht her leichter sowie einfacher zu handhaben. Auch ist das Auswechseln des Bandes schnell und einfach möglich, und hierbei müssen nur wenige Bauteile des Kurvenbandförderes demontiert werden.

Die Kurvenbandförderer weisen einen Tragrahmen mit ortsfest angeordneten ersten und zweiten vertikal ausgerichteten sowie ersten und zweiten horizontal ausgerichteten Führungsflächen auf. Von diesem Tragrahmen wird das Band endlos umlaufend geführt und abgestützt. Das endlose Band weist Mittel zur Führung des Bandes entlang der vertikalen Führungsflächen auf, um das endlose Band an einem seitlichen Abgleiten von dem Tragrahmen des Kurvenbandförderes zu hindern. Des weiteren ist ein länglicher Streifen aus flexiblem und reibungsarmem Werkstoff an dem endlosen Band befestigt, um über eine Abstützung an den horizontalen Führungsflächen eine Vertikalbewegung des endlosen Bandes zu verhindern.

Vorzugsweise ist der längliche Streifen des reibungsarmen und flexiblen Werkstoffes als technischer Filz ausgebildet und auf der Oberfläche des Bandes befestigt. Als Mittel zum Führen des Bandes an dem Tragrahmen des Kurvenbandförderers sind Rollenelemente vorgesehen.

Hervorzuheben ist, daß der Tragrahmen T-förmig ausgebildete Anschlußelemente aufweist, an dem die vertikalen und horizontalen Führungsflächen angeordnet sind. An dem Anschlußelement ist freitragend ein Querträger befestigt, von dem das endlose Band getragen wird. Das Anschlußelement weist einen horizontal ausgerichteten zentralen Steg und einen vertikalen oberen und unteren Flanschteil auf. An dem Steg des Anschlußelements ist eine Schiene aus einem Flachprofil angeordnet, die sich ausgehend von dem Steg nach oben und unten erstreckt, um die vertikalen Führungsflächen zur Verfügung zu stellen. An den Enden Der Flanschteile sind jeweils weitere Schienen befestigt, die sich parallel zu dem Steg erstrecken und die horizontalen Führungsflächen bilden. Hierdurch ist eine besonders kompakte Bauweise des Führungsteils des Tragrahmens möglich.

Des weiteren ist das endlose Band in Draufsicht gesehen in Form eines Kreisringabschnitts ausgebildet, dessen Innenseite entsprechenderweise eine geringere Länge als die Außenseite aufweist. An der in Radialrichtung gesehen äußeren Seite des endlosen Bandes sind eine Vielzahl von in Förderrichtung gesehen voneinander beabstandet angeordneten Führungselementen angeordnet, um das Band an einem Abgleiten von dem Tragrahmen zu hindern. Die Führungsmittel sind vorzugsweise als Rollenelemente ausgebildet, die an den im wesentlichen vertikal ausgerichteten Führungsflächen des Tragrahmens ablaufen.

Ferner ist vorteilhafterweise vorgesehen, an dem Anschlußelement einerseits einen senkrechten Ständer zu befestigen und andererseits auch eine Tragfläche für das Band anzuordnen, auf der dieses gleitet. Des weiteren sind an dem Anschlußelement erste, zweite und dritte Führungsflächen befestigt. Um das Band auf der gekrümmten Bahn des Kurvenbandförderers zu führen, sind eine Vielzahl von Führungselementen vorgesehen, die an dem endlosen Band angeordnet sind. Eine erste Gruppe von Führungselementen ist derart an dem Band angeordnet, daß sie an der als Schiene ausgebildeten ersten Führungsfläche abrollen. Um das Band an dem zweiten und dritten, ebenfalls als Schiene ausgebildeten Führungsflächen zu führen, sind die Führungsmittel als längliche Streifen aus reibungsarmem und flexiblem Material ausgebildet, die an dem endlosen Band befestigt sind.

In einer weiteren Ausführungsform der Erfindung ist mindestens ein Führungsmittel vorgesehen, das an der ebenfalls in Radialrichtung gesehen äußeren Seite des Bandes angeordnet ist und an den oberen und unteren im wesentlichen horizontal verlaufenden Führungsflächen abläuft, um die Vertikalbewegung des Bandes zu verhindern.

Besonders vorteilhaft ist die Ausbildung der Führungsmittel als Rollenelemente, die Laufflächen aus Polymerkunststoff aufweisen. Die Führungsflächen sind dann vorzugszweise aus Metall hergestellt. Für den Fall, daß die Führungsmittel als flexibler und reibungsarmer Streifen ausgebildet sind, wird das endlose Band über die Gleitreibung zwischen dem Streifen und den horizontalen Führungsflächen von einem Abheben von dem Querträger gehindert.

Diese und andere Bestandteile, Vorteile und Merkmale der Erfindung werden in der nachfolgenden Beschreibung eines Ausführungsbeispiels im Zusammenhang mit den Zeichnungen beschrieben. Es zeigen:
- Fig. 1: eine Draufsicht auf einen Kurvenbandförderer,
- Fig. 2: eine Ansicht von Fig. 1 entlang der Schnittlinie II - II,
- Fig. 3: die Fig. 2, wobei das Band entfernt ist,
- Fig. 4: eine Ansicht von Fig. 3 entlang der Schnittlinie IV - IV,
- Fig. 5: eine Ausschnittsvergrößerung von Fig. 2 aus dem Bereich der Führung des Bandes,
- Fig. 6: eine Ansicht gemäß Fig. 2 in einer anderen Ausführungsform der Führung für das Band und
- Fig. 7: eine Ausschnittsvergrößerung von Fig. 6.

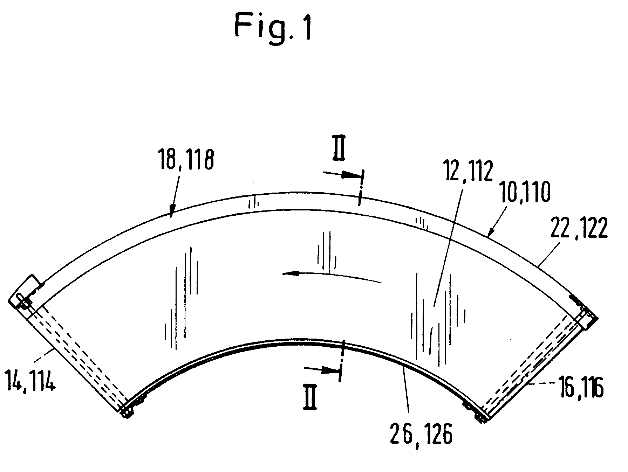

Die Figur 1 zeigt eine Draufsicht auf einen Kurvenbandförderer 10,110 mit einem endlosen Band 12,112 das endlos umlaufend um eine angetriebene Umlenkrolle 14, 114 und eine freilaufende Umlenkrolle 16,116 geführt ist. Die Umlenkrollen 14,16,114,116 sind jeweils am Anfang und Ende des Kurvenbandförderers 10,110 angeordnet. Bedingt durch die Kurvenform des Kurvenbandförderers 10,110 weist das endlose Band 12,112 in der Draufsicht gesehen die Form eines Kreisringabschnittes auf, wobei in Radialrichtung gesehen der Rand 13 an der Innenseite 26,126 des Förderers 10,110 eine geringere Länge als der Rand des Bandes 12,112 an der Außenseite 22,122 aufweist. Das endlose Band 12,112 ist vorzugsweise einteilig und endlos umlaufend ausgebildet. Es ist auch möglich, ein endloses Band 12,112 aus einem endlichen Bandabschnitt zu bilden, wobei die Enden des Bandes 12,112 mechanisch über gelenkige Verbindungsmittel miteinander verbunden werden. Des weiteren kann das Band 12,112 auch aus mehreren kreisringförmigen Abschnitten von Bandelementen bestehen, die zu einem endlos umlaufenden Band zusammengefügt werden. Die Umlenkrollen 14,16,114 und 116 sind konisch ausgebildet und treiben das endlose Band 12,112 über seine gesamte Breite reibschlüssig an. Hierfür wird das Band 12,112 zwischen den beiden Umlenkrollen 14,16,114 und 116 gespannt. Die Umlenkrollen 14,16,114 und 116 sowie das endlose Band 12,112 werden von einem Tragrahmen 18,118 aufgenommen.

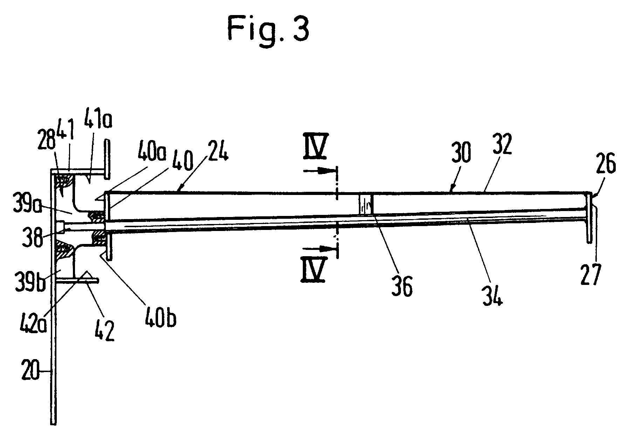

Der Tragrahmen 18,118 weist an der Außenseite 22,122 vertikale Ständer 20,120 zur Abstützung des Kurvenbandförderers 10,110 auf dem Boden auf und Querträger 24,124, die sich freitragend ausgehend von dem Ständer 20,120 horizontal erstrecken (s. Fig. 3). Die freitragende Ausbildung des Querträgers 24,124 ist bevorzugt, wenn das endlose Band 12,112 einteilig und somit endlos ausgebildet ist, da hier ein Auswechseln des Bandes nur durch ein seitliches Abschieben des Bandes 12,112 insgesamt von den Querträgern 24,124 möglich ist. Sollte das Band 12,112 teilbar ausgebildet sein, kann dieses auch von einem nicht freitragend ausgebildeten Querträger 24,124 leicht ausgewechselt werden.

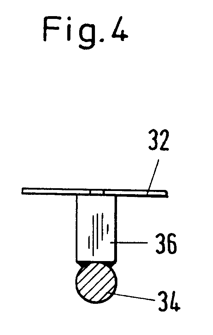

Der freitragende Querträger 24 ist über eine Vielzahl von Anschlußelementen 28,128 an den vertikalen Ständern 20,120 befestigt, wobei die Anschlußelemente 28,128 jeweils voneinander beabstandet entlang der in Radialrichtung des Kurvenbandförderers 10,110 gesehen äußeren Seite 22,122 angeordnet sind. Die Querträger 24 sind vorzugsweise als fachwerkartig und somit versteifte Tragelemente 30,130 ausgebildet sind, die im wesentlichen aus einer ebenen Tragfläche 32,132 besteht, die sich unterhalb des gesamten Obertrums des endlosen Bandes 12,112 erstreckt. Diese Tragfläche 32,132 wird über Verstrebungen 36,136 von quer zur Förderrichtung verlaufenden Profilen 34,134 getragen, die unterhalb der Tragfläche 32,132 verlaufen. Die Verstrebungen 36,136 sind jeweils mit einem Ende an dem Profil 34,134 und mit dem anderen Ende an der Tragfläche 32,132 angeschweißt sind (s. Figur 4). Die in Radialarichtung des Kurvenbandförderers 10,110 gesehen inneren Enden der Tragfläche 32,132 und jedes Profils 34,134 sind mit einem Abschlußelement 27,127 verschweißt. An der gegenüberliegenden Außenseite 22,122 ist jedes Profil 34,134 jeweils verwindungssteif an dem zugeordneten Anschlußelement 28,128 über nicht in der Zeichnung dargestellte Befestigungsmittel verbunden, die sich von außen durch das Anschlußelement 28,128 über eine hierin angeordnete Öffnung 38,138 erstrecken. Auf der Außenseite 22,122 des Kurvenbandförderers 10,110 ist die Tragfläche 32,132 verwindungssteif über eine plattenförmige Schiene 40,140 mit dem Anschlußelement 28,128 verbunden. Die Schiene 40,140 erstreckt sich hierbei über die gesamte Länge des Kurvenbandförderers 10,110. Durch die verwindungssteife Verbindung der Profile 34,134 und der Tragfläche 32,132 an einem Ende mit den Verbindungselementen 28,128 und an dem anderen Ende an dem Abschlußelement 27,127 in Verbindung mit der fachwerkartigen Aussteifung über die Verbindungselemente 36 wird ein sehr steifes Tragelement 30,130 geschaffen, über das in freitragender Weise die durch die Förderung des Stückguts hervorgerufenen Belastungen aufnehmbar sind. Eine zusätzliche Versteifung kann durch die Verwendung einer erhöhten Anzahl von Versteifungselementen 36,136 erreicht werden. Grundsätzlich ist es möglich, die Tragfläche 32,132 für das Band 12,112 auch durch andere Tragmittel, die nicht freitragend ausgebildet sind, zu stützen.

Jedes Anschlußelement 28,128 weist einen T-förmigen Querschnitt auf mit einem zentralen Steg 39a,139a und Flanschteile 39b,139b. An dem freien Ende des im wesentlichen horizontalverlaufenden Steges 39a, 139a ist eine erste plattenförmig ausgebildete Schiene 40 befestigt, die eine erste Führungsfläche mit oberen und unteren und im wesentlichen vertikal ausgerichteten Führungsflächen 40a und 40b bildet. Diese beiden Führungsflächen 40a und 40b verlaufen entlang der gesamten Länge der Außenseite 22 des Kurvenbandförderers 10. Des weiteren sind zweite und dritte Führungsflächen in Form von Schienen 41,142 vorgesehen, die an den oberen und unteren Enden des jeweiligen oberen und unteren sowie vertikal verlaufenden Flanschteils 38b befestigt sind. Hierdurch werden obere und untere sowie im wesentlichen horizontal verlaufende Führungsflächen 41a und 42a gebildet, die sich in Radialrichtung gesehen ausgehend von den Flanschteilen 38b nach innen in Richtung des Kurvenbandförderers 10 sowie horizontal erstrecken.

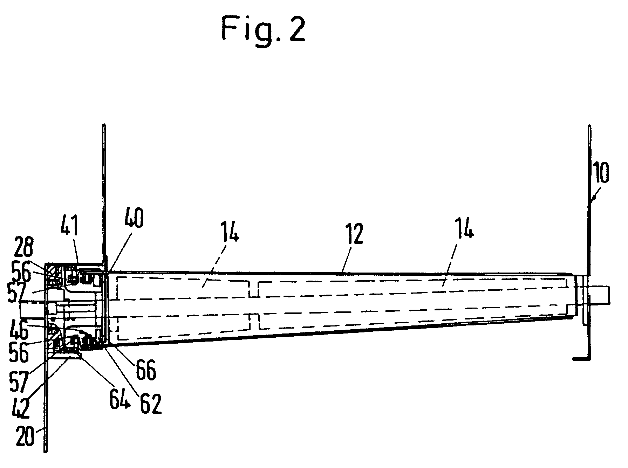

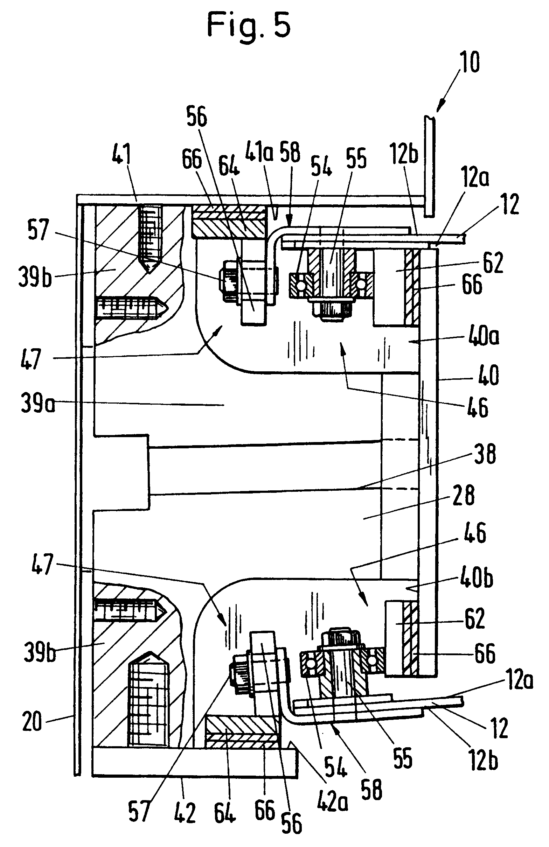

Um den endlosen Gurt 12 entlang des kurvenförmigen Verlaufes des Kurvenbandförderers 10 zu führen, sind erste und zweite Gruppen von Führungselementen 46 und 47 in Form von Rollenelementen vorgesehen, die an der in Radialrichtung des Bandes 12 gesehen äußeren Seite des Bandes angeordnet und in Förderrichtung gesehen voneinander beabstandet sind. Jedes erste Rollenelement 46 weist eine Rolle 54 auf, die über eine Achse 55 an dem Band 12 befestigt ist. Die Achse 55 erstreckt sich hierbei im wesentlichen rechtwinklig zu der Unterseite 12a des Obertrums des Bandes 12 und ist über nicht dargestellte Befestigungsmittel hieran angeordnet. Die Rollen 54 laufen in den oberen und unteren Führungsflächen 40a und 40b ab, wenn das Obertrum des Bandes 12 des Kurvenbandförderers entlang seiner gekrümmten Bahn bewegt wird. Den Figuren 2 und 5 ist zu entnehmen, daß die Rollen 54 an dem Teil des Gurtes 12 angeordnet sind, die dem Querträger 30 zugeordnet sind, und somit auf der Innenseite des endlos umlaufenden Bandes 12.

Jedes Führungselement 47 der zweiten Gruppe weist ebenfalls eine Rolle 56 auf, die wiederum um eine Achse 57 drehbar gelagert ist, die in einem L-förmigen Befestigungswinkel 58 gelagert ist. Der lange Schenkel des Befestigungswinkels 58 ist auf der Oberseite 12b des Bandes 12 über nicht dargestellte Befestigungsmittel angeordnet und ist derart an dem Band 12 befestigt, daß die Rolle 56 mit ihrer Lauffläche horizontal ausgerichtet ist (s. Figur 5), um an den ebenfalls horizontal ausgerichteten oberen und unteren Führungsflächen 41a und 42a ablaufen zu können. Hierbei läuft die obere Rolle 56 am Obertrum an der Unterseite der Schiene 41 und die untere Rolle 56 am Untertrum an der Oberseite der Schiene 42 ab. Entsprechenderweise wie die Rollen 54 sind die Rollen 56 derart an dem Band 12 befestigt, daß sie - quer und horizontal zur Förderrichtung gesehen - innerhalb der von dem Band 12 gebildeten Außenkontur angeordnet sind. Die Berührungsebene der Rolle 56 und der Führungsfläche 41a liegt etwa in einer horizontalen Ebene mit dem Obertrum des Bandes 12.

Die horizontalen und die vertikalen Führungsflächen 40a,40b,41a und 42a sind mit Führungsschienen 62,64 versehen, die über Verbindungselemente 66 an den Schienen 40,41,42 befestigt sind. In dem Ausführungsbeispiel weisen die Rollen 54 und 56 Laufflächen in Form von Reifen auf, die aus Kunststoff oder Polymeren, wie z.B. Urethan, hergestellt sind. Die Führungsschienen 62,64 sind hierbei aus Metall, vorzugsweise aus Stahl, hergestellt. Alternativ ist es möglich, die Rollen 54 und 56 mit Laufflächen aus Metall, vorzugsweise aus Stahl, und die Führungsschienen 62 und 64 aus Kunststoff oder Polymeren, wie z.B. Urethan, herzustellen. Diese bevorzugte Kombination eines Kunststoff-Metallkontaktes zwischen den Rollen 54 und 56 sowie den Führungsschienen 62 und 64 führt zu einer Reduzierung der Lärmentwicklung des Kurvenbandförderers 10.

Die Führungsschienen 62 und 64 sind vorzugsweise auswechselbar und in diesem Zusammenhang die Verbindungselemente 66 als Klettverschlüsse ausgebildet, wie sie z.B. unter dem Warenzeichen Velcro^{®} vertrieben werden. Hierdurch wird ein schneller Austausch der Führungsschienen 62 und 64 ermöglicht.

Um das Band 12 austauschen zu können, braucht nur ein einziges Bauteil, und zwar die plattenförmige Schiene 40, entfernt zu werden, wodurch die Rollenelemente 46 und 47 von dem Anschlußelement 28 entfernt werden kann, so daß das Band 12 nach innen von dem Tragrahmen 18 heruntergezogen werden kann.

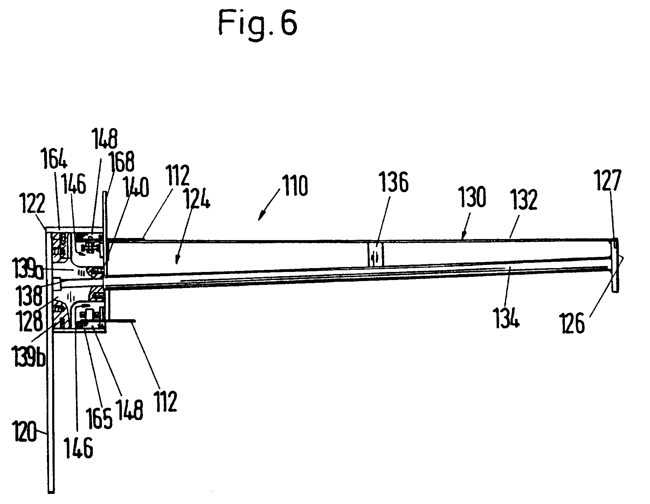

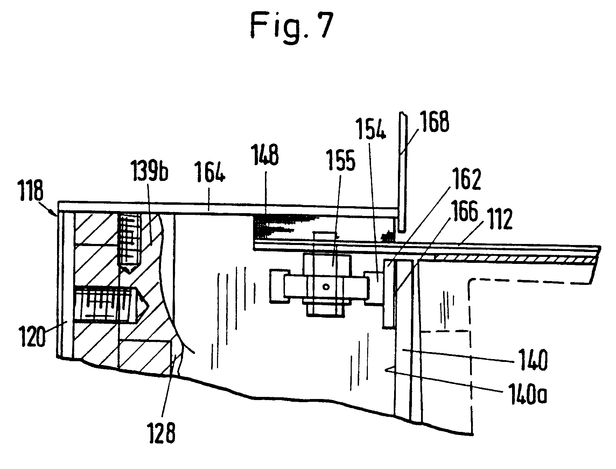

In den Figuren 6 und 7 ist eine weitere Ausführungsform der vorliegenden Erfindung dargestellt. Der dort gezeigte Kurvenbandförderer 110 ist vom grundsätzlichen Aufbau her mit der zuvor beschriebenen Ausführungsform des Kurvenbandförderers 10 vergleichbar. Zur Vereinfachung wird auf die dort erfolgte Beschreibung verwiesen, wobei gleiche Bauteile dieser beiden Ausführungsformen mit gleichen Bezugsziffern in der Einer- und Zehnerstelle bezeichnet sind.

Diese Ausführungsform unterscheidet sich in der Art der Ausbildung der Führung des Bandes 12 an den horizontalen Führungsflächen 40. Hier ist anstatt der zuvor beschriebenen rollenden Führung über Führungsemente 47 eine gleitende Führung über Führungsmittel 148 vorgesehen. Diese Führungsmittel 148 sind als längliche Streifen eines reibungsarmen und flexiblen Werkstoffes ausgebildet. Vorzugsweise ist dieser Werkstoff ein technisches Filz, insbesondere ein NPF60-Band der Firma Bode-Leder-Beltech GmbH, Geesthacht/Deutschland. Der Streifen 148 ist auf die Oberseite des Bandes 112 und an dessen in Radialrichtung gesehen äußeren Seite mittels eines Klebstoffes, der vorzugsweise von der Herstellerfirma des Gurtes stammt, befestigt. Den Figuren 6 und 7 ist zu entnehmen, daß der Streifen 148 eine Vielzahl von in seiner Längsrichtung gesehen einander beabstandeten als Versenkbohrungen ausgebildeten Öffnungen aufweist, um Raum für die Befestigung der Achsen 155 für die Rollen 154 zur Verfügung zu stellen. Die Achsen 155 sind über Befestigungsmittel mit dem Band 112 verbunden, die von der Oberseite des Bandes her sich durch die Öffnung in dem Band 112 in Richtung der Achsen 155 erstrecken. Um das endlose Band 112 an einem Abheben von dem Tragelement 130 zu hindern, ist der Streifen 148 gleitend zwischen dem endlosen Band 112, das von dem Tragelement 130 abgestützt wird und der im wesentlichen horizontal ausgerichteten Führungsfläche der Schienen 164 und 165 angeordnet. Die Schiene 164 ist steif an dem oberen Ende des Flanschteils 139b des Verbindungselementes 128 mittels Befestigungsmitteln oder anderer möglicher Verbindungsmittel befestigt und erstreckt sich horizontal über die in Radialrichtung gesehen äußere Seite 122 des Bandes 128 bis zu einem äußeren Führungsteil 168, das das Fördergut an einem Verlassen des Bandes 112 hindert. In gleicher Weise ist die Schiene 165 mit dem unteren Flanschteil 139b des Aufnahmeelementes 128 verbunden. Die Schienen 164 und 165 sind vorzugsweise als warm- oder kaltgewalzter Kohlenstoffstahl, rostfreier Stahl oder chrombeschichtet ausgebildet. Des weiteren können die Schienen 164 und 165 mit einer keramischen oder einer Teflon^{®}-Beschichtung versehen sein, um die zwischen den Schienen 164,165 und dem Streifen 148 möglicherweise entstehende Hitze zu reduzieren.

In Versuchen ist festgestellt worden, daß das endlose Band 112 in der erfindungsgemäßen Ausgestaltung für einen weiten Bereich von Bandgeschwindigkeiten eingesetzt werden kann. In dem Bereich von 1,2 bis 1,5 m/s erfolgt die Führung des Bandes 112 in Vertikalrichtung ausschließlich über den Streifen 148, der an den Führungsflächen der Schienen 164 und 165 entlanggleitet.

Erst ab Geschwindigkeiten des Bandes über 1,5 m/s können zur Entlastung des Streifens 158 zusätzliche Rollenelemente mit Rollen vorgesehen werden, um die Reibung zwischen dem Streifen 148 und den Schienen 164 und 165 zu vermindern. Hierdurch würde auch eine Verminderung der Reibungswärme, die typischerweise bei diesen hohen Geschwindigkeiten entsteht, erzielt werden.

Da der längliche Streifen 148 ein Abheben des Bandes 112 in Vertikalrichtung von dem Tragrahmen verhindert, wird hier grundsätzlich keine zweite Gruppe von Rollenelementen benötigt, wie bei der zuvor beschriebenen Ausführungsform beschrieben. Die Verwendung des Streifens 148 führt dazu, daß eine deutliche Reduzierung der Lärmentwicklung des Kurvenbandförderers erreicht wird und die Bauhöhe des Kurvenbandförderers minimiert wird. Darüber hinaus ist ein Auswechseln des endlosen Bandes 112 einfacher, da die Anzahl der Rollenelemente an dem Band 112 halbiert ist. Hierdurch wird auch erreicht, daß das Band 112 vom Gewicht her leichter und somit leichter zu installieren ist.

Obwohl die zuvor beschriebene Erfindung in bezug auf einen Kurvenbandförderer beschrieben ist, kann sie auch in Bandförderern mit geraden Förderabschnitten sowie Staubandförderern angewandt werden.

### Bezugszeichenliste

- 10,110: Kurvenbandförderer
- 12,112: Band
- 12a: Oberseite von 12
- 12b: Unterseite von 12
- 14,114: angetriebene Umlenkrolle
- 16,116: freilaufende Umlenkrolle
- 18,118: Tragrahmen
- 20,120: vertikaler Ständer
- 22,122: Außenseite des Förderers
- 24,124: Querträger
- 26,126: Innenseite des Förderers
- 27,127: Abschlußelement
- 28,128: Anschlußelement
- 30,130: fachwerkartiges Tragelement
- 32,132: Tragfläche
- 34,134: Profil
- 36,136: Verstrebung
- 38,138: Öffnung
- 39a,139a: zentraler Steg
- 39b,139b: Flanschteil
- 40,140: Schiene
- 40a,140a: Führungsfläche
- 40b: Führungsfläche
- 41: Schiene
- 41a: Führungsfläche
- 42: Schiene
- 42a: Führungsfläche
- 46,146: Führungselemente
- 47: Führungselemente
- 54,154: Rollen von 46,146
- 55,155: Achse von 54,154
- 56: Rolle von 47
- 57: Achse von 56
- 58: Haltelement
- 62,162: Führungsschiene
- 64: Führungsschiene
- 66,166: Befestigungselement
- 148: Führungsmittel
- 164,164: Schiene
- 168: Führungselement

## Patentansprüche

1. Kurvenbandförderer (10, 110), bestehend aus
einem Tragrahmen (18, 118) mit ersten und zweiten im wesentlichen vertikal ausgerichteten Führungsflächen (40a, 40b, 140a) und mit ersten und zweiten im wesentlichen horizontal ausgerichteten weiteren Führungsflächen (64, 164, 165),
einem endlos umlaufend und von dem Tragrahmen (18, 118) unterstützten Band (12, 112), das Führungselemente (46, 146) für ein Zusammenwirken mit den vertikalen Führungsflächen (40a, 40b, 140a) für ein Halten und zur Verhinderung eines seitlichen Wanderns des Bandes (12, 112) auf dem Tragrahmen (18, 118) aufweist, und einem an dem Band (12, 112) angeordneten länglichen Führungselement (48, 148) der zur Verhinderung einer Vertikalbewegung des Bandes (12, 112) im Eingriff mit den horizontalen Führungsflächen (Schiene 41a, 42a, 64, 164, 165) steht,
dadurch gekennzeichnet,
daß das Führungselement (148) aus reibungsarmem und flexiblem Material und als Streifen aus einem technischen Filz ausgebildet ist.

2. Kurvenbandförderer nach Anspruch 1,
dadurch gekennzeichnet,
daß das Führungselement (148) einen flachen Querschnitt aufweist.

3. Kurvenbandförderer nach Anspruch 1 oder 2,
dadurch gekennzeichnet,
daß das Führungselement (148) sich entlang einer in Radialrichtung gesehen äußeren Seite des Bandes (12, 112) erstreckt und auf dessen Oberfläche befestigt ist.

4. Kurvenbandförderer nach einem der Ansprüche 1 bis 3,
dadurch gekennzeichnet,
daß das Führungselement (148) in den horizontal verlaufenden Bereichen des Bandes (12, 112) zwischen jeweils der ersten oder zweiten horizontal verlaufenden Schiene (64, 164, 165) und dem Band (12, 112) eingezwängt ist.

5. Kurvenbandförderer nach einem der Ansprüche 1 bis 4,
dadurch gekennzeichnet,
daß der Tragrahmen (18, 118) Anschlußelemente (28, 128) aufweist, an denen die vertikalen (40a, 40b, 140a) und horizontalen Führungsflächen angeordnet sind, die als Schienen (64, 164, 165) ausgebildet sind.

6. Kurvenbandförderer nach Anspruch 5,
dadurch gekennzeichnet,
daß der Tragrahmen (18, 118) Querträger (24, 124) für eine Tragfläche (32, 132) aufweist, die freitragend sich von dem jeweiligen Anschlußelement (28, 128) erstrecken und das Obertrum des Bandes (12, 112) abstützen, dessen Untertrum unterhalb der Querträger (24) verläuft.

7. Kurvenbandförderer nach Anspruch 5 oder 6,
dadurch gekennzeichnet,
daß die Anschlußelemente (28, 128) im Querschnitt jeweils T-förmig ausgebildet sind und an einem vertikalen Ständer (20, 120) befestigt sind.

8. Kurvenbandförderer nach einem der Ansprüche 1 bis 7,
dadurch gekennzeichnet,
daß die Führungselemente (46, 146) Rollen (54, 154) aufweisen.

9. Kurvenbandförderer nach einem der Ansprüche 1 bis 8,
dadurch gekennzeichnet,
daß die Führungselemente (46, 146) an der Innenseite des endlos umlaufenden Bandes (12, 112) befestigt sind.

10. Kurvenbandförderer nach Anspruch 8 oder 9,
dadurch gekennzeichnet,
daß die Rollen (54, 56, 154) mit Reifen aus Polymer-Kunststoff versehen sind.

11. Kurvenbandförderer nach einem der Ansprüche 5 bis 10,
dadurch gekennzeichnet,
daß die Anschlußelemente (28, 128) jeweils in Vertikalrichtung verlaufende obere und untere Flanschteile (39b, 139b) und einen zentralen sowie in Horizontalrichtung verlaufenden Steg (39a, 139a) aufweisen.

12. Kurvenbandförderer nach Anspruch 11,
dadurch gekennzeichnet,
daß die Flanschteile (39b, 139b) der Anschlußelemente (28, 128) an den vertikalen Ständern (20, 120) befestigt sind.

13. Kurvenbandförderer nach Anspruch 12,
dadurch gekennzeichnet,
daß die Führungsflächen (40a, 41a, 140a) von flachprofilförmigen Schienen (40, 140) gebildet sind die an dem Steg (39a, 139a) befestigt sind und sich ausgehend von dem Steg (39a, 139a) in Vertikalrichtung nach oben und unten erstrecken.

14. Kurvenbandförderer nach Anspruch 13,
dadurch gekennzeichnet,
daß an den oberen und unteren Flanschteilen (39b, 139b) die horizontal angeordneten Führungsflächen angeordnet sind, die als flachprofilförmige zweite und dritte Schienen (41, 164 und 42, 165) ausgebildet sind.

15. Kurvenbandförderer nach einem der Ansprüche 1 bis 12,
dadurch gekennzeichnet,
daß die Führungsflächen (40a, 41a, 42a, 140a) aus Führungsschienen (62, 64, 162) für die Rollen (54, 56, 154) gebildet sind.

16. Kurvenbandförderer nach Anspruch 15,
dadurch gekennzeichnet,
daß die Führungsschienen (62, 64, 162) lösbar an den ersten und zweiten sich vertikal erstreckenden Führungsflächen (40a, 41a, 42a und 140a) angeordnet sind.

17. Kurvenbandförderer nach Anspruch 16,
dadurch gekennzeichnet,
daß die Führungsschienen (62, 64, 162) über Befestigungsmittel (66, 166) nach Art eines Klettverschlusses lösbar befestigt sind.

18. Kurvenförderer nach einem der Ansprüche 1 bis 17,
dadurch gekennzeichnet,
daß das Band (12, 112) über in Förderrichtung gesehen vorne und hinten angeordnete Umlenkrollen (14, 16, 114, 116) umgelenkt ist, mindestens eine der Umlenkrollen (14, 16, 114, 116) über einen Antrieb drehbar ist zur reibschlüssigen Bewegung des Bandes (12, 112).

19. Kurvenbandförderer nach Anspruch 18,
dadurch gekennzeichnet,
daß die Umlenkrollen (14, 16, 114, 116) kegelig ausgebildet sind und deren Achsen geneigt bis zur Horizontalrichtung verlaufen.

20. Kurvenbandförderer nach einem der Ansprüche 1 bis 19,
dadurch gekennzeichnet,
daß das Band (12, 112) in der Draufsicht gesehen kreisringförmig ausgebildet ist und an der in Radialrichtung gesehen äußeren Seite des Bandes der Streifen (148) endlos umlaufend angeordnet ist.

21. Kurvenbandförderer nach einem der Ansprüche 1 bis 20,
dadurch gekennzeichnet,
daß die Querträger (24, 124) eine Vielzahl voneinander beabstandeten Verstrebungen (36, 136) aufweisen, die zwischen einer ebenen Tragfläche (32, 132) und einem sich quer zur Förderrichtung erstreckenden Profil (34, 134) angeordnet sind und somit einen fachwerkartigen Träger (30, 130) bilden.

## Claims

1. Apron conveyor (10, 110) consisting of a support frame (18, 118) comprising first and second substantially vertically aligned guide faces (40a, 40b, 140a) and first and second substantially horizontally aligned further guide faces (64, 164, 165), a continuously revolving belt (12, 112) supported by the support frame (18, 118), which belt has guide elements (46, 146) for co-operation with the vertical guide faces (40a, 40b, 140a) for holding and preventing lateral migration of the belt (12, 112) on the support frame (18, 118), and a longitudinal guide element (48, 148) disposed on the belt (12, 112), which in order to prevent vertical movement of the belt (12, 112) is engaged with the horizontal guide faces (rail 41a, 42a, 64, 164, 165), characterised in that the guide element (148) is formed of low-friction, flexible material and as a strip composed of a commercial felt.

2. Apron conveyor according to claim 1, characterised in that the guide element (148) has a flat cross-section.

3. Apron conveyor according to claim 1 or 2, characterised in that the guide element (148) extends along an outer side of the belt (12, 112) viewed in the radial direction and is fixed to its surface.

4. Apron conveyor according to one of claims 1 to 3, characterised in that the guide element (148) is constrained in the horizontally extending regions of the belt (12, 112) between respectively the first or second horizontally extending rails (64, 164, 165) and the belt (12, 112).

5. Apron conveyor according to one of claims 1 to 4, characterised in that the support frame (18, 118) has connecting elements (28, 128) on which the vertical (40a, 40b, 140a) and horizontal guide faces are disposed, which are formed as rails (64, 164, 165).

6. Apron conveyor according 10 claim 5, characterised in that the support frame (18, 118) has cross-beams (24, 124) for a support face (32, 132), which extend in a cantilevered manner from the respective connecting element (28, 128) and support the upper strand of the belt (12, 112), whose lower strand extends under the cross-beam (24).

7. Apron conveyor according to claim 5 or 6, characterised in that the connecting elements (28, 128) are T-shaped in cross-section and are fixed to a vertical pillar (20, 120).

8. Apron conveyor according to one of claims 1 to 7, characterised in that the guide elements (46, 146) have rollers (54, 154).

9. Apron conveyor according to one of claims 1 to 8, characterised in that the guide elements (46, 146) are fixed to the inner face of the continuously revolving belt (12, 112).

10. Apron conveyor according to claim 8 or 9, characterised in that the rollers (54, 56, 154) are provided with tyres of a polymer plastics material.

11. Apron conveyor according to one of claims 5 to 10, characterised in that the connecting elements (28, 128) have respective upper and lower flange parts (39b, 139b) extending in the vertical direction and a central web (39a, 139a) extending in the horizontal direction.

12. Apron conveyor according to claim 11, characterised in that the flange parts (39b, 139b) of the connecting elements (28, 128) are fixed to the vertical pillars (20, 120).

13. Apron conveyor according to claim 12, characterised in that the guide faces (40a, 41a, 140a) are formed from flat profile-shaped rails, which are fixed to the web (39a, 139a) and which extend from the web (39a, 139a) vertically up and down.

14. Apron conveyor according to claim 13, characterised in that the horizontally disposed guide faces, which are formed as flat-profile-shaped second and third rails (41, 164 and 42, 165), are disposed on the upper and lower flange parts (39b, 139b).

15. Apron conveyor according to one of claims 1 to 12, characterised in that the guide faces (40a, 41a, 42a, 140a) are formed from guide rails (62, 64, 162) for the rollers (54, 56, 154).

16. Apron conveyor according to claim 15, characterised in that the guide rails (62, 64, 162) are disposed detachably on the first and second vertically extending guide faces (40a, 41a, 42a and 140a).

17. Apron conveyor according to claim 16, characterised in that the guide rails (62, 64, 162) are fixed via fixing means (66, 166) in the manner of a burr lock.

18. Apron conveyor according to one of claims 1 to 17, characterised in that the belt (12, 112) is coupled around front and rear deflection rollers (14, 16, 114, 116) in the direction of conveying, and at least one of the deflection rollers (14, 16, 114, 116) is rotatable by a drive for the friction-locking movement of the belt (12, 112).

19. Apron conveyor according to claim 18, characterised in that the deflection rollers (14, 16, 114, 116) are conical and their axes extend in an inclined manner with respect to the horizontal direction.

20. Apron conveyor according to one of claims 1 to 19, characterised in that the belt (12, 112) viewed in plan is circular and on the outer side of the belt viewed in the radial direction the strip (148) is disposed in a continuously revolving manner.

21. Apron conveyor according to one of claims 1 to 20, characterised in that the cross-beams (24, 124) have a plurality of spaced struts (36, 136), which are disposed between a plane supporting face (32, 132) and a profile (34, 134) extending transverse to the conveying direction and thus form a support (30, 130) in the manner of a truss.

## Revendications

1. Transporteur à bande curviligne (10, 110), constitué d'un bâti de support (18, 118) ayant des première et seconde surfaces de guidage (40a, 40b, 140a) orientées généralement verticalement et d'autres première et seconde surfaces de guidage (64, 164, 165) orientées généralement horizontalement, d'une bande (12, 112) tournant sans fin et supportée par le bâti de support (18, 118), qui présente des éléments de guidage (46, 146) pour une coopération avec les surfaces de guidage verticales (40a, 40b, 140a) pour un maintien et pour empêcher un déplacement latéral de la bande (12, 112) sur le bâti de support (18, 118), et d'un élément de guidage allongé (48, 148) agencé sur la bande (12, 112), qui, pour empêcher un déplacement vertical de la bande (12, 112), est en engagement avec les surfaces de guidage horizontales (rail 41a, 42a, 64, 164, 165),
caractérisé en ce que l'élément de guidage (148) est réalisé en une matière souple et à faible frottement et comme bande en un feutre technique.

2. Transporteur à bande curviligne selon la revendication 1,
caractérisé en ce que l'élément de guidage (148) présente une section transversale plate.

3. Transporteur à bande curviligne selon la revendication 1 ou 2,
caractérisé en ce que l'élément de guidage (148) s'étend le long d'un côté de la bande (12, 112), externe en direction radiale, et est fixé sur sa surface.

4. Transporteur à bande curviligne selon une des revendications 1 à 3,
caractérisé en ce que l'élément de guidage (148), dans les zones s'étendant horizontalement de la bande (12, 112), est pressé, à chaque fois, entre le premier ou second rail s'étendant horizontalement (64, 164, 165) et la bande (12, 112).

5. Transporteur à bande curviligne selon une des revendications 1 à 4,
caractérisé en ce que le bâti de support (18, 118) présente des éléments de raccordement (28, 128), sur lesquels sont agencées les surfaces de guidage verticales (40a, 40b, 140a) et horizontales, qui sont réalisées comme rails (64, 164, 165).

6. Transporteur à bande curviligne selon la revendication 5,
caractérisé en ce que le bâti de support (18, 118) présente des traverses (24, 124) pour une surface de support (32, 132), qui s'étendent en saillie de l'élément de raccordement respectif (28, 128) et supportent le brin supérieur de la bande (12, 112), dont le brin inférieur s'étend au-dessous des traverses (24).

7. Transporteur à bande curviligne selon la revendications 5 ou 6,
caractérisé en ce que les éléments de raccordement (28, 128) sont réalisés, à chaque fois, sous forme de T en section transversale et sont fixés à un montant vertical (20, 120).

8. Transporteur à bande curviligne selon une des revendications 1 à 7,
caractérisé en ce que les éléments de guidage (46, 146) présentent des galets (54, 154).

9. Transporteur à bande curviligne selon une des revendications 1 à 8,
caractérisé en ce que les éléments de guidage (46, 146) sont fixés sur la face interne de la bande (12, 112) tournant sans fin.

10. Transporteur à bande curviligne selon la revendication 8 ou 9,
caractérisé en ce que les galets (54, 56, 154) sont munis de bandages en matière synthétique polymère.

11. Transporteur à bande curviligne selon une des revendications 5 à 10,
caractérisé en ce que les éléments de raccordement (28, 128) présentent, à chaque fois, des parties d'aile supérieure et inférieure (39b, 139b) s'étendant en direction verticale et une âme (39a, 139a) centrale ainsi que s'étendant en direction horizontale.

12. Transporteur à bande curviligne selon la revendication 11,
caractérisé en ce que les parties d'aile (39b, 139b) des éléments de raccordement (28, 128) sont fixées aux montants verticaux (20, 120).

13. Transporteur à bande curviligne selon la revendication 12,
caractérisé en ce que les surfaces de guidage (40a, 41a, 140a) sont formées par des rails (40, 140) sous forme de profilé plat, qui sont fixés à l'âme (39a, 139a) et s'étendent vers le haut et vers le bas, en direction verticale, à partir de l'âme (39a, 139a).

14. Transporteur à bande curviligne selon la revendication 13,
caractérisé en ce que les surfaces de guidage agencées horizontalement sont agencées sur les parties d'aile supérieure et inférieure (39b, 139b), surfaces qui sont réalisées comme des second et troisième rails (41, 164 et 42, 165) sous forme de profilé plat.

15. Transporteur à bande curviligne selon une des revendications 1 à 12,
caractérisé en ce que les surfaces de guidage (40a, 41a, 42a, 140a) sont formées à partir de rails de guidage (62, 64, 162) pour les galets (54, 56, 154).

16. Transporteur à bande curviligne selon la revendication 15,
caractérisé en ce que les rails de guidage (62, 64, 162) sont agencés de façon amovible sur les première et seconde surfaces de guidage (40a, 41a, 42a et 140a) s'étendant verticalement.

17. Transporteur à bande curviligne selon la revendication 16,
caractérisé en ce que les rails de guidage (62, 64, 162) sont fixés de façon amovible par l'intermédiaire de moyens de fixation (66, 166) à la manière d'un ruban auto-accrochant.

18. Transporteur à bande curviligne selon une des revendications 1 à 17,
caractérisé en ce que la bande (12, 112) est renvoyée par l'intermédiaire de rouleaux de renvoi (14, 16, 114, 116) agencés à l'avant et à l'arrière dans la direction de transport, au moins un des rouleaux de renvoi (14, 16, 114, 116) pouvant tourner par l'intermédiaire d'un entraînement pour le déplacement par adhérence de la bande (12, 112).

19. Transporteur à bande curviligne selon la revendication 18,
caractérisé en ce que les rouleaux de renvoi (14, 16, 114, 116) sont réalisés sous forme conique et leurs axes s'étendent de façon inclinée jusqu'à la direction horizontale.

20. Transporteur à bande curviligne selon une des revendications 1 à 19,
caractérisé en ce que la bande (12, 112), en vue de dessus, est réalisée sous forme de bague circulaire et, sur la face externe en direction radiale de la bande, la bande (148) est agencée en tournant sans fin.

21. Transporteur à bande curviligne selon une des revendications 1 à 20,
caractérisé en ce que les traverses (24, 124) présentent une pluralité d'entretoises (36, 136) écartées les unes des autres, qui sont agencées entre une surface de support plane (32, 132) et un profilé (34, 134) s'étendant transversalement à la direction de transport et, ainsi, forment un support (30, 130) du type treillis.
